# EUROPÄISCHE PATENTSCHRIFT

(11) **EP 2 431 200 B1**
(45) Veröffentlichungstag und Bekanntmachung des Hinweises auf die Patenterteilung: **13.01.2016**
(21) Anmeldenummer: 11007563.7
(22) Anmeldetag: 16.09.2011
(51) Int. Cl.: B60D 1/167, B62B 5/00

(54) **Zugdeichsel für einen Niederhubwagen**
Drawbar for a low lift truck
Timon de traction pour un chariot élévateur à petite levée

(30) Priorität: 16.09.2010 DE 102010046168
(43) Veröffentlichungstag der Anmeldung: 21.03.2012
(73) Patentinhaber: Jungheinrich Aktiengesellschaft, 22047 Hamburg (DE)
(72) Erfinder: Hackbarth, Christoph, 21401 Barendorf (DE); Kühnapfel, Ralf, 21397 Vasdorf (DE)
(74) Vertreter: Hauck Patentanwaltspartnerschaft mbB

(56) Entgegenhaltungen:
- DE-A1- 1 480 602
- DE-U- 1 881 388
- DE-U- 1 972 398
- DE-U- 7 100 699
- DE-U- 7 315 771
- DE-U- 7 410 347
- DE-U1-202009 015 783
- US-A- 1 728 839
- US-A- 2 460 466
- US-A- 2 472 989
- US-A- 2 844 389
- US-A- 4 253 679

## Beschreibung

Die vorliegende Erfindung betrifft eine Zugdeichsel für einen Niederhubwagen, insbesondere für einen Handgabelhubwagen.

Bei Niederhubwagen sind die die Ladungsträger aufnehmenden Lastarme im Bereich ihrer Spitze durch Lastrollen abgestützt. Für den Niederhub wird der Lastarm an dem Niederhubwagen angehoben, dies erfolgt über die Lastrollen, die im Bereich der Spitze der Lastarme diese abstützen. Die Größe der dabei eingesetzten Lastrollen ist regelmäßig durch die angestrebte Unterfahrhöhe der Lastarme begrenzt. Sollen mit dem Niederhubwagen größere Strecken und weite Wege zurückgelegt werden, so erweisen sich die in ihrer Baugröße beschränkten Lastrollen als nachteilig.

Aus dem deutschen Gebrauchsmuster GM 1 972 398 ist eine Anhängekupplung für Flurförderzeuge und Hubfahrzeuge bekannt. Die Anhängekupplung besitzt einen frei schwenkbaren Schlepparm, mit dem ein geschlepptes oder schleppendes Flurförderzeug an seinem Lastarm verbunden werden kann.

Aus DE 103 18 458 ist ein Gabelhubwagen bekannt, der an die Lastarmspitze eines Niederhubfahrzeugs angekoppelt werden kann. Hierdurch ist es möglich, größere Laufrollen für das Niederhubflurförderzeug bereitzustellen.

Aus DE 18 81 388 U ist ein Palettentieflader, insbesondere ein Handgabelhubwagen bekannt geworden, von dem mehrere zu einem Anhängerzug zusammengestellt werden können. Zur Verbindung der Handgabelhubwagen wird am freien Ende der Lastgabel mittels eines Ansteckschuhs eine Anhängerkupplung angesetzt, die über eine dreieckige Zugdeichsel mit einem Hülse schleppenden Fahrzeug verbunden ist.

Aus DE 196 41 403 ist ein Rangierwagen mit einem Kupplungselement bekannt geworden. Das Kupplungselement ist fest an einem Schwenkteil angebracht, wobei das Schwenkteil über eine horizontale Schwenkachse verschwenkbar mit dem Chassis des Rangierwagens verbunden ist.

Aus DE 73 15 771 U ist ein Gabelhubwagen mit einer Schleppeinrichtung bekannt geworden, die eine Zuggabel besitzt, deren freien Enden mit den freien Enden der Lastarme eines zu schleppenden Fahrzeugs verbindbar ist.

Aus DE 103 18 458 A1 ist ein Gabelhubwagen bekannt geworden, an dessen Enden der Lastarme ein Radsatz lösbar ansetzbar ist.

Aus DE 119 72 398 U ist eine Anhängerkupplung für Flurförderzeuge bekannt geworden, die einen an seinem Fahrzeugende angeordneten schwenkbaren Kupplungsarm aufweist, der am vorderen Ende eine nach oben offene Rastausnehmung besitzt, die mit einer Rastkante am Ende eines anderen Fahrzeugs zusammenwirkt. Über eine Feder ist ein aus seiner hochgeklappten Stellung nach unten schwenkbarer Arm am Vorderachskörper angeordnet, der eine Zuggabel bildet, die an ihrem freien Ende einen federvorgespannten Riegel zur Verbindung mit dem anderen Fahrzeug aufweist.

Aus DE 71 00 699 U, auf der der Oberbegriff von Anspruch 1 basiert, ist eine Kupplungsvorrichtung für Gabelhubwagen bekannt geworden, die eine verschwenkbare Zuggabel aufweist, die an ihren freien Enden eine keilförmige Auflauffläche und einen federvorgespannten Riegel zur Verbindung mit den Lastarmen eines geschleppten Flurförderzeugs besitzt.

US 2,460,466 beschreibt eine Kupplungsvorrichtung für Rollwagen mit einem U-förmigen Rahmen, wobei an dem Rahmen Mittel zur Verbindung an einer Stoßstange angebracht sind. Eine Deichsel kann mit Hilfe einer Verstärkungsplatte und einem Ball an dem Rahmen befestigt werden. Der U-förmige Rahmen kann über einen Bolzen an eine Platte eines Fahrzeuges nach oben und unten schwenkbar angebracht werden.

Der Erfindung liegt die Aufgabe zugrunde, eine Vorrichtung bereitzustellen, bei der mit einfachen Mitteln ein Niederhubwagen zuverlässig als schleppendes und/oder geschlepptes Fahrzeug eingesetzt werden kann.

Erfindungsgemäß wird die Aufgabe durch eine Zugdeichsel für einen Niederhubwagen mit den Merkmalen aus Anspruch 1 gelöst. Vorteilhafte Ausgestaltungen bilden den Gegenstand der Unteransprüche.

Die erfindungsgemäße Zugdeichsel ist für einen Niederhubwagen, insbesondere für einen Handgabelhubwagen vorgesehen. Die Zugdeichsel weist eine Zuggabel auf, die zwei parallel zueinander verlaufende Zugarme aufweist, von denen jeder mindestens eine Laufrolle aufweist. Ferner besitzt die erfindungsgemäße Zugdeichsel einen Adapter zur Verbindung der Zugdeichsel mit einem Fahrzeug. Hierbei handelt es sich bevorzugt um das geschleppte Fahrzeug. Es ist aber auch möglich, den Adapter an dem schleppenden Fahrzeug vorzusehen. Der Adapter ist bevorzugt über einen Deichselarm mit den Zugarmen der Zugdeichsel verbunden. Das Fahrzeug mit dem Adapter für die Zugdeichsel kann hierbei ein beliebiges Flurförderzeug oder ein sonstiges Fahrzeug sein. Auch ist es möglich, dass der Adapter die Zugdeichsel selbst wiederum an einem schleppenden oder geschleppten Niederhubwagen vorgesehen ist, so dass ein Schleppverband von Niederhubwagen entsteht. Bei der erfindungsgemäßen Zugdeichsel ist vorgesehen, dass der schleppende Niederhubwagen mit den Spitzen seiner Lastarme sich auf der Zuggabel abstützt und seine Lastrollen keinen Bodenkontakt haben. Ein derart aufgelagertes Niederhubflurförderzeug läuft auf den Laufrollen der Zugdeichsel, die deutlich größer ausgebildet sein können als die Lastrollen des Niederhubwagens.

Bei einer bevorzugten Ausgestaltung weisen die Zugarme im Bereich ihrer Spitze jeweils Mittel zum Verbinden mit einem Lastarm eines Niederhubwagens auf. Die Zugarme nehmen im Bereich ihrer Laufrollen die Lastarme des Niederhubwagens auf und stützen diese ab. Auf diese Weise können die Lastrollen des Niederhubwagens eingefahren werden. Der Niederhubwagen fährt so gestützt auf die Laufrollen der Zugdeichsel.

In einer ersten Ausgestaltung weisen die Mittel zur Verbindung eine erste vorstehende Lasche auf, die aus dem Zugarm vorsteht und die von dem freien Ende der Zugarme fort weist. Bei der Verbindung mit dem Lastarm des Niederhubwagens wird die Spitze des Lastarms über die vorstehende Lasche geführt und die vorstehende Lasche hintergreift die Wand des Lastarms in der verbundenen Position.

In einer bevorzugten Ausgestaltung sind die Mittel zur Verbindung mit einer quer zur Längsrichtung des Zugarms verlaufenden Nut versehen, die auf der zum Adapter weisenden Seite der Lasche angeordnet ist. Bei dieser Ausgestaltung wird die Wandspitze sowohl von der vorstehenden ersten Lasche hintergriffen als auch durch das Eintauchen in die Nut auf dem Zugarm gehalten.

In einer weiteren bevorzugten Ausgestaltung besitzen die Mittel zum Verbinden einen Anschlag für die Spitze der Lastarme des Niederhubflurförderzeugs. Auf diese Weise kann sichergestellt werden, dass der zu schleppende Niederhubwagen die gewünschte Position auf dem Zugarmen einnimmt und die Zugdeichsel nicht zu weit unter die Lastarme geschoben werden.

In einer weiteren bevorzugten Ausgestaltung ist der Deichselarm schwenkbar um eine parallel zur Achse der Laufräder verlaufende Schwenkachse und drehbar zu einer senkrecht zu der von den Zugarmen aufgespannten Ebene verlaufenden Achse gelagert. Bezogen auf den Untergrund, auf dem die Zugdeichsel steht, bedeutet dies, dass der Deichselarm neigbar um eine parallel zum Untergrund verlaufende Achse und schwenkbar um eine senkrecht zum Untergrund stehende Achse an dem Adapter gelagert ist.

In einer bevorzugten Ausgestaltung ist der Deichselarm in eine Position federvorgespannt. Bevorzugt ist die federvorgespannte Position des Deichselarms die aufrechte Position des Deichselarms, in der die Zugarme nach oben weisen. Zur Benutzung der Zugdeichsel wird der Deichselarm gegen die vorgespannte Feder ausgeklappt und berührt mit seinen Laufrollen den Untergrund.

In einer bevorzugten Ausgestaltung weist der Adapter einen Gelenkkopf auf, über den die Zuggabel in jeder Raumrichtung beweglich ist. Eine solche über ein Kugelgelenk oder Lenkkopf verbundene Zuggabel besitzt den Vorteil, dass die mit dem schleppenden Fahrzeug verbundene Zuggabel an Rampen oder bei einem schiefen Untergrund sich ausrichten kann, ohne dass die über die Zuggabel hergestellte Verbindung die Kräfte aufnehmen muss.

In einer weiteren bevorzugten Ausgestaltung besitzt der Adapter eine parallel zum Untergrund verlaufende Achse, um die ein mit der Zuggabel verbundener Hebelarm schwenkbar ist. Der Hebelarm, der kürzer als der Deichselarm ausgebildet sein kann, ist mit der Zuggabel verbunden. Über die Schwenkachse des Hebelsarms kann die Zuggabel nach oben in ihre Ruheposition geklappt werden.

Bevorzugt ist der Adapter mit mindestens einem Vorsprung versehen und der Hebelarm mit mindestens einer Ausnehmung, wobei in der hochgeklappten Ruheposition der Zuggabel die mindestens eine Ausnehmung an dem Hebelarm mit dem Vorsprung an dem Adapter in Eingriff bringbar ist. Auf diese Weise ist die Ruheposition gesichert und der Gelenkkopf festgesetzt.

In einer weiteren bevorzugten Ausgestaltung besitzt der Adapter auf seiner Unterseite ein im Querschnitt runden Verbindungszapfen. Über diesen Verbindungszapfen kann der Adapter direkt mit einem schleppenden Fahrzeug verbunden werden, wobei die Zuggabel dann in ihrer Ruheposition verbleiben kann. Das Schleppfahrzeug benötigt zur Verbindung mit dem Verbindungszapfen einen Ausleger, der mit einer korrespondierenden kreisrunden Bohrung in dem Verbindungszapfen ausgestattet ist.

In einer weiteren bevorzugten Ausgestaltung ist die Höhe der Oberseite der Zugarme kleiner als eine vorbestimmte Höhe, wobei die vorbestimmte Höhe der Höhe der Unterkante des Lastarms des Niederhubwagens in einer angehobene Position ist.

Um das mit der Zugdeichsel versehene Fahrzeug gegen Kippen zu sichern, kann im Bereich des Adapters an dessen Unterseite ein Stützpilz vorgesehen sein, der vor einem Kippen des Fahrzeugs dieses auf dem Untergrund abstützt.

In einer bevorzugten Ausgestaltung sind mehrere Niederhubwagen durch die erfindungsgemäße Zugdeichsel miteinander verbunden und bilden einen Schleppzug, der von einem Fahrzeug gezogen wird. Das schleppende Fahrzeug kann mit dem ersten Niederhubwagen aus dem Schleppzug ebenfalls über die Zugdeichsel verbunden werden, sofern das schleppende Fahrzeug Lastarme aufweist.

Zwei bevorzugte Ausführungsbeispiele der erfindungsgemäßen Zugdeichsel werden nachfolgend anhand der Figuren näher erläutert. Es zeigt:
- Fig. 1: die erfindungsgemäße Zugdeichsel in einer ersten Ausgestaltung an einen Handgabelhubwagen angekoppelt in einer Ansicht von der Seite,
- Fig. 2: die erfindungsgemäße Zugdeichsel aus Fig. 1 an einen Handgabelhubwagen angekoppelt in ihrer hochgeklappten Position,
- Fig. 3: die erfindungsgemäße Zugdeichsel aus Fig. 1 in ihrer Betriebsposition,
- Fig. 4: die erfindungsgemäße Zugdeichsel in einer zweiten Ausgestaltung in einer perspektivischen Ansicht,
- Fig. 5: eine Detailansicht eines Schleppfahrzeugs mit einer Zugstange,
- Fig. 6: einen Radsatz für das letzte Fahrzeug in einem Zugverband,
- Fig.7: eine erfindungsgemäße Zugdeichsel in einer dritten Ausgestaltung in einer perspektivischen Ansicht und
- Fig. 8: die Zugdeichsel aus Fig. 7 mit einem geschleppten Fahrzeug verbunden.

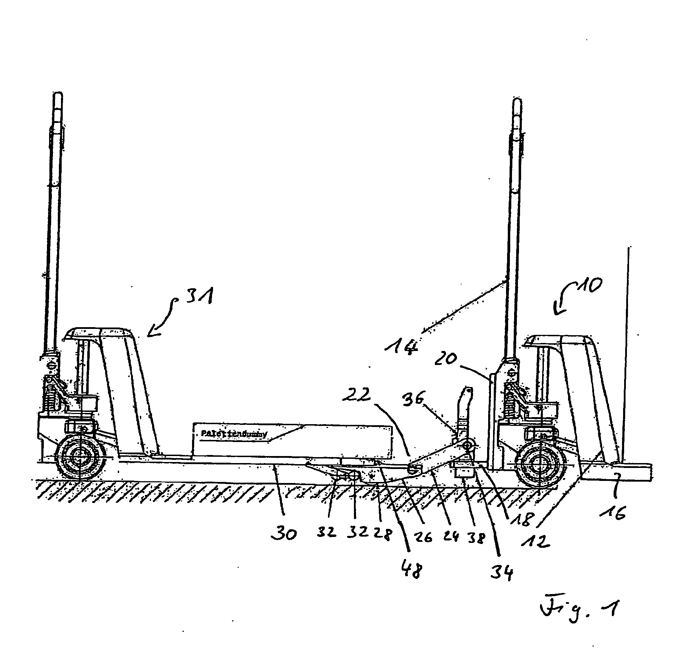

Fig. 1 zeigt einen Handgabelhubwagen 10, der ein Lastteil 12 und eine Deichsel 14 besitzt. Das Lastteil 12 ist ausschnittsweise dargestellt, die Lastarme 16 setzen sich fort, um eine Palette oder eine sonstige Last aufnehmen zu können. Der Handgabelhubwagen 10 besitzt auf seiner zur Deichsel 14 weisenden Seite einen Adapter 18, der über eine Platte 20 mit dem Fahrzeugkörper verbunden ist. Auf dem Adapter 18 angeordnet ist die Zugdeichsel 22, die einen Deichselarm 24 und zwei parallel zueinander angeordnete Zugarmen 26 besitzt. Die Zugarme 26 bilden eine Zuggabel 27. An den Zugarmen 26 ist jeweils eine Laufrolle 28 angeordnet, mit der sich die Zugdeichsel 22 auf dem Untergrund abstützt.

In Fig. 1 ist die abgesenkte Position der Zugdeichsel 22 dargestellt, in der die Laufrolle 28 sich auf dem Untergrund abstützt und die Spitze der Lastgabel 30 auf der Oberseite des Zugarms 26 aufliegt. Die Lastgabel 30 gehört zu dem schleppenden Niederhubwagen 31. An der Unterseite der Lastgabel 30 sind schwenkbare Paare von Lastrollen 32 angeordnet, die an einer Wippe gelagert sind. In an sich bekannter Art und Weise werden die schwenkbaren Lastrollen 32 über eine unterhalb der Lastgabel 30 geführte Zug- und/oder Druckstange verschwenkt, um den Hub zu bewirken. In der in Fig. 1 dargestellten Position der Lastrollen 32 liegen diese oder der zugehörige Arm mit der Wippe, an der die Lastrollen befestigt sind, an der Unterseite des Zugarms an und sichern so zusätzlich die Verbindung zwischen Lastarm und Zugarm.

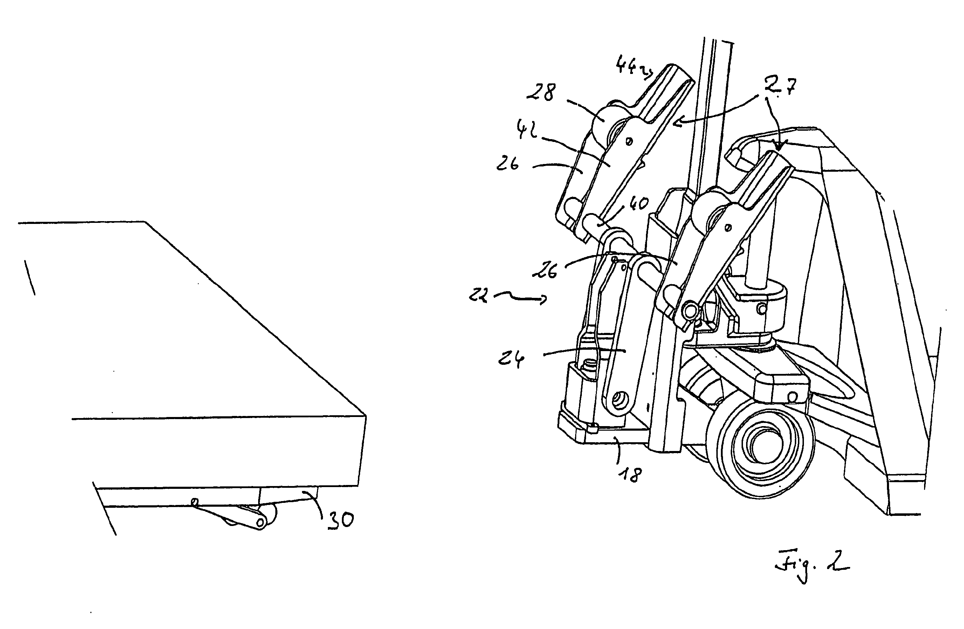

Die Zugdeichsel 22 ist an dem Gelenk 34 neigbar gelagert, wobei die Zugdeichsel 22 durch eine Feder (nicht dargestellt) in ihre aufrechte Position (vgl. Fig. 2) vorgespannt ist. Ferner ist die Zugdeichsel 22 für Lenkbewegungen zwischen dem Flurförderzeug 10 und dem schleppenden Flurförderzeug im Anlenkpunkt 36 drehbar gelagert. Die Drehbewegung erfolgt um eine Achse die senkrecht zum Untergrund steht.

Der Adapter 18 wird auf seiner Unterseite von einem Stützpilz 38 abgestützt, der ein Umkippen des Fahrzeugs 10 verhindert.

Fig. 2 zeigt in einer perspektivischen Ansicht von der Seite die Zugdeichsel 22 in ihrer hochgeklappten Position. Der Deichselarm 24 steht ungefähr senkrecht auf dem Adapter 18. Der Stützpilz 38 (vgl. Fig. 1) ist zur besseren Übersicht in Fig. 2 nicht eingezeichnet. Die Zugarme 26 sind über eine Traverse 40 mit dem Deichselarm 24 verbunden. Der Abstand der Zugarme 26 entspricht dem Abstand der Lastarme 30, die durch die Zugarme 26 abgestützt werden sollen.

Die Zugarme selbst besitzen einen im Wesentlichen U-förmigen Querschnitt, wobei die Seitenwände 42 im Bereich der Laufrolle 28 eine größere Tiefe besitzt. Die Laufrolle 28 ist in den Seitenwänden 42 drehbar gelagert. Im Bereich der Spitze 44 besitzen die Zugarme eine geringere Höhe an ihren Seitenwänden.

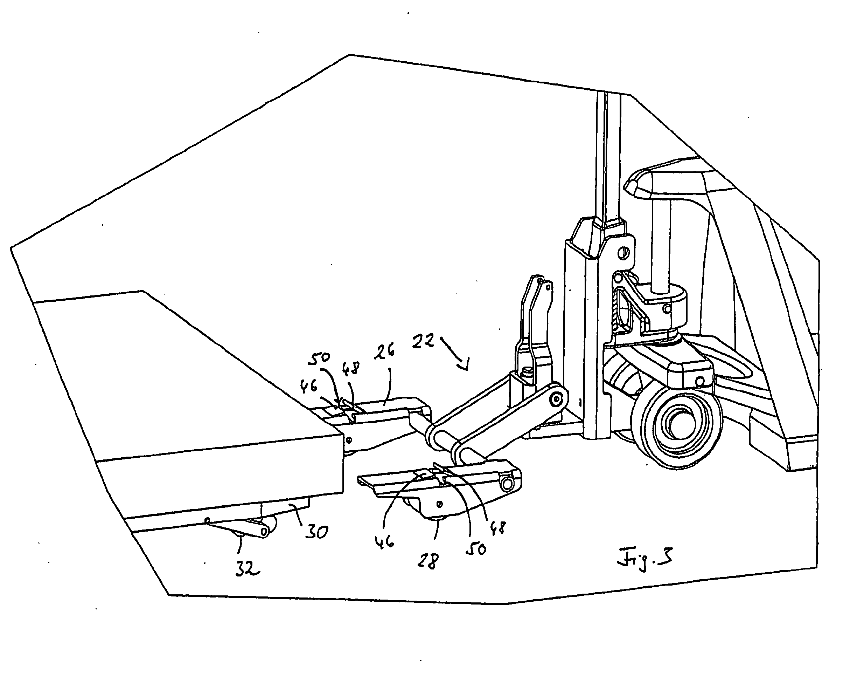

Fig. 3 zeigt die Zugdeichsel 22 in ihrer heruntergeklappten Position. Jeder der Zugarme 26 besitzt im Bereich der Laufrolle 28 Verbindungsmittel für einen der Lastarme 30. Die Verbindungsmittel sehen zwei vorstehende Laschen 46 und 48 vor. Die Lasche 48 dient als Anschlag für die aufzunehmenden Lastarme 30. Die Lasche 48 ist vom Deichselarm 24 aus fort geneigt und ist aus dem Grund des U-förmigen Zugarms 26 gebildet. Die zweite Lasche 46 ist entgegengesetzt geneigt und ist vom Deichselarm 24 fort hochgebogen. Auch die zweite Lasche 46 besteht aus dem Grund des Zugarms 26. Zwischen den Laschen 46 und 48 befindet sich eine Nut 50, in die die Seitenwand des Lastarms 30 im Bereich ihrer Spitze einrasten kann.

Bei der Verbindung des Zugarms 26 mit dem Lastarm 30 wird der Lastarm 30 zunächst angehoben, so dass die Zugarme 26 unterhalb der Lastarme 30 positioniert werden können. Hierbei fährt die Spitze des Lastarms 30 über die Lasche 46 und verhakt durch Absenden des Lastarms. in der Nut 50 und wird durch den Anschlag 48 in der Nut 50 gesichert. Ein weiteres Absenken der Lastarme bewirkt ein Abheben der Lastrollen vom Boden. Die angehobenen Lastrollen sichern zusätzlich die Verbindung von Lastarm und Zugarm, indem die angehobenen Lastrollen an der Unterseite des Zugarms anliegen. Die abgesenkten Lastarme 30 sind ausschließlich durch die Laufrollen 28 gestützt, ohne dass die Lastrollen Bodenkontakt besitzen.

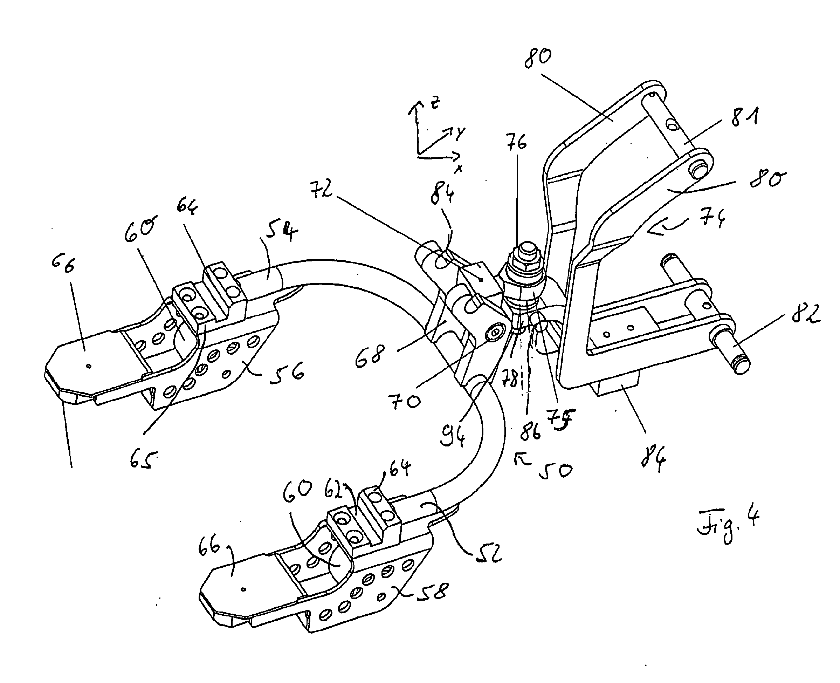

Fig. 4 zeigt eine alternative Ausgestaltung der erfindungsgemäßen Zugdeichsel. Die Zugdeichsel besitzt eine Zuggabel 50 mit zwei zumindest in ihren Endabschnitten parallel zueinander verlaufenden Zugarmen 52, 54. Die Zugarme 52, 54 besitzen an ihren freien Enden angesetzte Verbindungsstücke 56, 58, die mit einer Laufrolle 60 ausgestattet sind. Die Verbindungsstücke besitzen auf ihrer Oberseite ein Nut 62, die von einem fahrzeugseitigen Anschlag 64 begrenzt wird. Ein zweiter Anschlag 65 begrenzt die Nut auf der anderen Seite. In die Nut 62 haken die Lastarme des schleppenden Fahrzeugs ein. Die Verbindungsstücke besitzen zusätzlich an ihrem freien Ende eine vorstehende Zunge 66, die unter den Lastarm des schleppenden Fahrzeugs geschoben wird. Die Lastrollen des schleppenden Fahrzeugs liegen in ihrem eingefahrenen Zustand an der Unterseite der Zunge 66 an.

Die Zuggabel 50 ist an ihrem zum Fahrzeug weisenden Ende über einen Hebelarm 68 an einem Lagerblock 72 eines Adapters 74 gelagert. Hierbei ist der Hebelarm 68 um die durch den Lagerblock 73 verlaufende Schwenkachse 70 verschwenkbar. Der Lagerblock 72 ist über einen Adapter 74 an einem Kugelgelenk 76 gelagert, so dass der Lagerblock 72 entlang den Richtungen X, Y und Z des eingezeichneten kartesischen Koordinatensystems verschwenkbar ist. Das Kugellager 76 ist in einem Trägerabschnitt 78 des Adapters 74 gelagert. Der Trägerabschnitt 78 ist zwischen zwei im Wesentlichen C-förmigen Armen 80 angeordnet. Die Arme 80 werden an ihrem oberen Ende über eine Querstrebe 81 mit einer Lenkachse (nicht dargestellt) des geschleppten Fahrzeugs verbunden. Das andere Ende der C-förmigen Arme 80 hält eine Radachse 82 für die Räder des geschleppten Fahrzeugs. Ein Stückpilz 84 an der Unterseite der C-förmigen Arme 80 verhindert ein Aufsetzen des Adapters.

In Fig. 4 ist die betriebsbereite Position der Zuggabel 50 dargestellt. Das schleppende Fahrzeug wird mit seinen Lastarmen voran auf den Verbindungsstücken 56, 58 angeordnet und die Lastrollen unter seinen Lastarmen werden eingefahren, so dass die Lastarme des schleppenden Fahrzeugs sich über die Laufrollen 60, die auch als Laufräder ausgebildet sein können, abstützt. In der nicht dargestellten Ruheposition wird die Zuggabel 50 über die Schwenkachse 70 hoch geschwenkt, so das hakenförmige Ausnehmungen 84 an dem freien Ende der Hebelarme 68 an seitlichen Vorsprüngen 86 an dem Trägerabschnitt 78 eingreifen und so die Ruheposition sichern können.

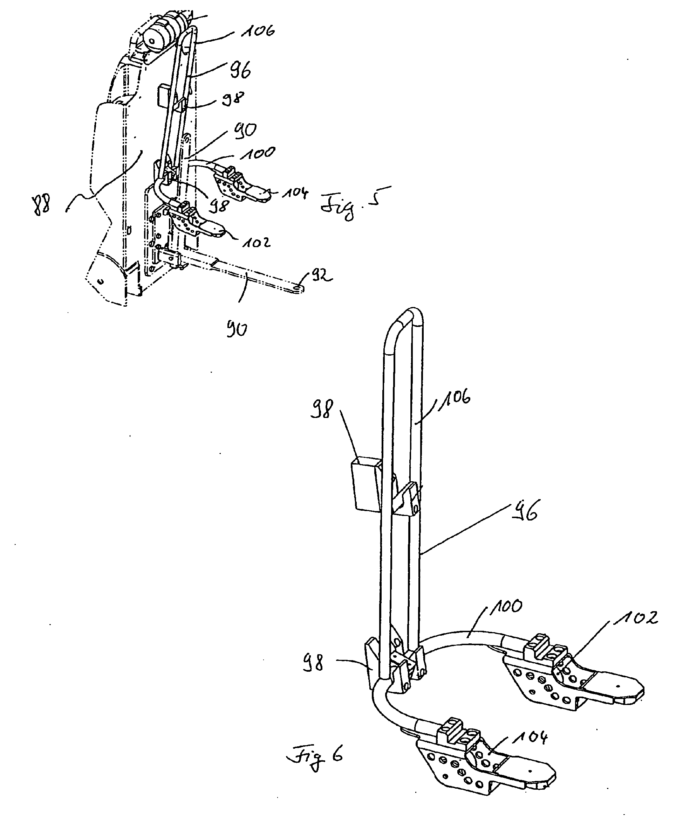

Fig. 5 zeigt die Rückseite 88 eines Schleppfahrzeugs, das mit einem Schlepparm 90 ausgestattet ist. Zur besseren Übersicht ist in Fig. 5 der Schlepparm 90 sowohl in seiner heruntergeklappten, betriebsbereiten Position als auch in seiner hochgeklappten Ruheposition dargestellt. Der Schlepparm 90 hat an seinem Ende eine kreisförmige Öffnung 92, die in einen kreisrunden Zapfen 94 unterhalb des Trägerabschnitts 78 eingreifen kann (vgl. Fig. 4). Auf diese Weise kann das erste geschleppte Fahrzeug mit hochgeklappter Zuggabel über den Zugarm 90 geschleppt werden.

Fig. 5 zeigt ferner einen Abschlussradsatz 96, der an der Rückwand 88 des Schleppfahrzeugs mit aufgeführt werden kann. Der Radsatz 96 ist in Fig. 6 im Detail dargestellt. Der Radsatz 96 ist über zwei Haken 98 an der Rückwand des schleppenden Fahrzeugs aufgehängt. Der Radsatz 96 besitzt eine Zuggabel 100, die mit ihren Verbindungsstücken 102, 104 ebenso wie die an dem Adapter montierte Zuggabel aufgebaut ist. Zur besseren Handhabung ist die Zuggabel 100 mit einem Bügel 106 versehen, der ein Einsetzen des Radsatzes 96 unter die Lastarme des letzten geschleppten Fahrzeugs im Zugverband erlaubt.

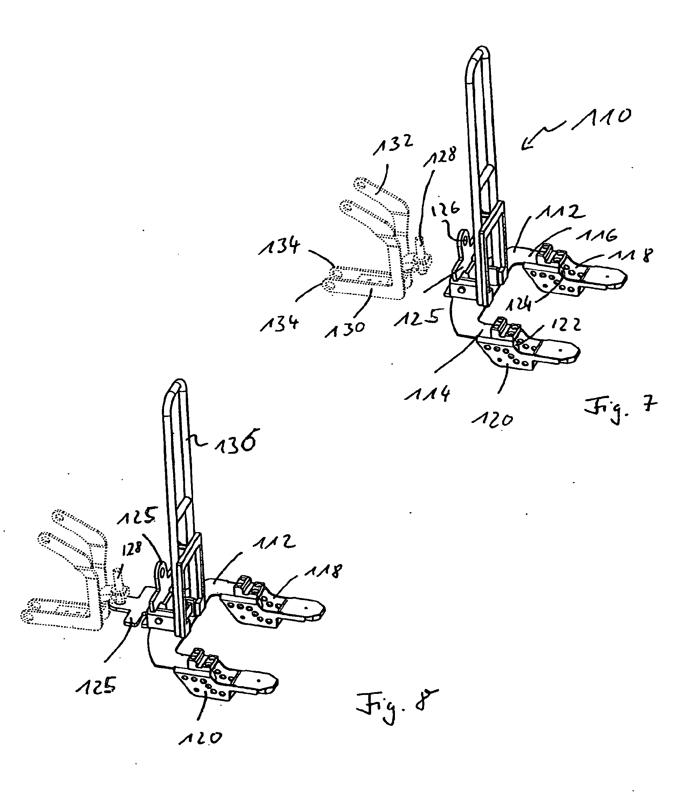

Fig. 7 zeigt eine dritte Ausgestaltung der erfindungsgemäßen Zugdeichsel 110. Die Zugdeichsel 110 besitzt eine Zuggabel 112 mit zwei zumindest in ihren Endabschnitten parallel zueinander verlaufenden Zugarmen 114 und 116. Die Zugarme 114 und 116 tragen an ihrem freien Ende angesetzte Verbindungsstücke 118. 120, die mit Laufrollen 122, 124 ausgestattet sind. Die Verbindungsstücke 118, 120 entsprechen dem Aufbau der Verbindungsstücke aus Fig. 4.

Die Zugdeichsel 110 besitzt ferner einen Adapter 125, der am seinem Ende mit einer Öffnung 126 versehen ist. Der Adapter 125 ist in Fig. 7 in seiner hochgeklappten Position dargestellt. In Fig. 8 ist der Adapter 125 sowohl in seiner hochgeklappten als auch in seiner betriebsbereiten Position dargestellt. Über eine Feder (nicht dargestellt) wird der Adapter 125 in seine hochgeklappte Position gedrückt und muss gegen die Federkraft in seine betriebsbereite, waagerechte Position gedrückt werden.

Anders als bei den in den Fign. 1 bis 4 dargestellten Ausführungen ist die Zugdeichsel 110 nicht dauerhaft mit einem Fahrzeug verbunden, sondern als separates Bauteil ausgebildet, das zum Betrieb über den Adapter 125 mit einem Schleppzapfen 128 und einem geschleppten Handgabelhubwagen verbunden wird. Der Schleppzapfen 128 ist zwischen zwei C-förmigen Armen 130, 132 angeordnet. Die C-förmigen Arme 130, 132 können beispielsweise von ihrem unteren Ende 134 mit einer Radachse des geschleppten Handgabelhubwagens verbunden sein.

Fig. 8 zeigt den verbundenen Zustand der Zugdeichsel, bei dem der Adapter 125 in seine horizontale Betriebsposition geschwenkt ist und von unten mit dem Schleppzapfen128 verbunden ist, wobei der Adapter 125 durch die Federkraft nach oben gedrückt wird und so an dem Schleppzapfen 128 gesichert ist.

Die als separates Bauteil ausgebildete Zugdeichsel 110 besitzt einen Handbügel 136, der mit der Zuggabel 112 verbunden ist. Über den Handbügel 136 kann die Zugdeichsel 110 zwischen zwei Handgabelhubwagen positioniert und mit diesen verbunden werden, wobei der schleppende Handgabelhubwagen mit den Verbindungsstücken 118 und 120 an seinen Gabelarmspitzen eingehakt wird und dessen Lastrollen mit Hilfe der Verbindungsstücke 118, 120 fixiert werden. Der geschleppte Handgabelhubwagen besitzt einen Schleppzapfen 128, mit dem die Zugdeichsel 110 über den Adapter 125 verbunden ist.

## Patentansprüche

1. Zugdeichsel für einen Niederhubwagen, insbesondere für einen Handgabelhubwagen, mit
- einer Zuggabel (27), die zwei parallel zueinander verlaufende Zugarme (26) aufweist, von denen jeder an seinem freien Ende jeweils Mittel (46, 48, 50) zur Verbindung mit einem Lastarm (30) eines Niederhubwagens besitzt, und
- einem Adapter (18) zur Verbindung der Zugdeichsel mit einem Fahrzeug (10), wobei der Adapter (18) mit der Zuggabel (27) verbunden ist,
**dadurch gekennzeichnet, dass**
- jeder der beiden parallel zueinander verlaufenden Zugarme mindestens eine Laufrolle (28) aufweist und
- die Mittel (46, 48, 50) zur Verbindung mit dem Lastarm (30) eine vorstehende Lasche (46) und eine quer zur Längsrichtung des Zugarms verlaufende Nut (50) aufweisen, die von einer Wand an der Spitze des Lastarms des Niederhubwagens hintergriffen werden kann.

2. Zugdeichsel nach Anspruch 1, **dadurch gekennzeichnet, dass** der Adapter (18) über einen Deichselarm (24) mit der Zuggabel (27) verbunden ist.

3. Zugdeichsel nach einem der Ansprüche 1 bis 2, **dadurch gekennzeichnet, dass** die Mittel zur Verbindung einen Anschlag (48) für die Spitze des Lastarms des Niederhubwagens besitzen.

4. Zugdeichsel nach Anspruch 2 oder 3, **dadurch gekennzeichnet, dass** der Deichselarm schwenkbar um eine parallel zum Untergrund verlaufende Achse und drehbar um eine senkrecht zum Untergrund verlaufende Achse gelagert ist.

5. Zugdeichsel nach Anspruch 4, **dadurch gekennzeichnet, dass** der Deichselarm in eine verschwenkbare Position federvorgespannt ist.

6. Zugdeichsel nach einem der Ansprüche 1 bis 5, **dadurch gekennzeichnet, dass** der Adapter einen Gelenkkopf aufweist, über den die Zuggabel in jeder Raumrichtung beweglich ist.

7. Zugdeichsel nach Anspruch 6, **dadurch gekennzeichnet, dass** der Adapter eine parallel zum Untergrund verlaufende Achse aufweist, um die ein mit der Zuggabel verbundener Hebelarm schwenkbar ist.

8. Zugdeichsel nach Anspruch 7, **dadurch gekennzeichnet, dass** der Adapter mindestens einen Vorsprung aufweist und der Hebelarm mindestens eine Ausnehmung aufweist, die in einer hochgeklappten Ruheposition der Zuggabel mit dem mindestens einen Vorsprung in Eingriff bringbar ist.

9. Zugdeichsel nach einem der Ansprüche 6 bis 8, **dadurch gekennzeichnet, dass** der Adapter auf seiner Unterseite einen im Querschnitt runden Verbindungszapfen aufweist.

10. Zugdeichsel nach einem der Ansprüche 1 bis 9, **dadurch gekennzeichnet, dass** der Adapter zwei C-förmige Schenkel aufweist, die eine Achse für Räder des schleppenden Fahrzeugs halten.

11. Zugdeichsel nach einem der Ansprüche 1 bis 10, **dadurch gekennzeichnet, dass** die Höhe der Oberseite jedes Zugarmes kleiner als eine vorbestimmte Höhe ist, wobei die vorbestimmte Höhe der Unterkante des Lastarms des Niederhubwagens in seiner angehobenen Position entspricht.

12. Zugdeichsel nach einem der Ansprüche 1 bis 3, **dadurch gekennzeichnet, dass** der Adapter (125) schwenkbar mit der Zuggabel (112) verbunden ist und an seinem von der Zuggabel (112) fortweisenden Ende eine Öffnung (126) zur Verbindung mit einem Schleppzapfen (128) aufweist.

13. Zugdeichsel nach Anspruch 12, **dadurch gekennzeichnet, dass** die Zuggabel (112) einen Bügel (136) aufweist, der senkrecht zu den Zugarmen (114, 116) als Bedienhilfe vorsteht.

14. Schleppzug bestehend aus einem schleppenden Fahrzeug und mindestens einem Niederhubwagen, die untereinander mit der Zugdeichsel gemäß Anspruch 1 bis 11 verbunden sind.

## Claims

1. A drawbar for a low-platform truck, for a hand pallet truck in particular, with
• a towing fork (27), which has two parallel-running towing arms (26), from which each one has means (46, 48, 50) for the connection to a load arm (30) of a low-platform truck on its free end, and
• an adapter (18) for connection of the drawbar to a vehicle (10), the adapter (18) being connected to the towing fork (27),
**characterised in that**
• each one of the two parallel-running towing arms has at least one roller (28), and
• the means (46, 48, 50) for the connection to the load arm (30) have a projecting strap (46) and a groove (50) which runs crosswise to the longitudinal direction of the towing arm and which can be reached behind by a wall on the top of the load arm of the low-platform truck.

2. The drawbar according to claim 1, **characterised in that** the adapter (18) is connected to the towing fork (27) via a drawbar arm (24).

3. A drawbar according to any one of claims 1 to 2, **characterised in that** the means for connection have a stop (48) for the top of the load arm of the low-platform truck.

4. A drawbar according to claim 2 or 3, **characterised in that** the drawbar arm is pivotally mounted around an axis running parallel to the ground floor, and rotatably mounted around an axis that runs vertically to the ground floor.

5. The drawbar according to claim 4, **characterised in that** the drawbar arm is spring-preloaded into a pivotal position.

6. A drawbar according to any one of claims 1 to 5, **characterised in that** the adapter has a swivel head, via which the towing fork can be moved into any spatial direction.

7. The drawbar according to claim 6, **characterised in that** the adapter has an axis that runs in parallel to the ground floor and around which a lever arm connected to the towing fork can be swung.

8. The drawbar according to claim 7, **characterised in that** the adapter has at least one projection and the lever arm has at least one recess, which can be brought into engagement with the at least one projection in a folded up rest position of the towing fork.

9. A drawbar according to any one of claims 6 to 8, **characterised in that** on its downside, the adapter has a connection spigot that is round in its cross section.

10. A drawbar according to any one of claims 1 to 9, **characterised in that** the adapter has two C-shaped legs which hold an axis for wheels of the towing vehicle.

11. A drawbar according to any one of claims 1 to 10, **characterised in that** the height of the upper side of each towing arm is smaller than a predetermined height, the predetermined height corresponding to the lower edge of the load arm of the low-platform truck in its lifted position.

12. A drawbar according to any one of claims 1 to 3, **characterised in that** the adapter (125) is pivotally connected to the towing fork (112), and has an opening (126) for connection to a tow spigot (128) on its end which points away from the towing fork (112).

13. The drawbar according to claim 12, **characterised in that** the towing fork (112) has a bracket (136), which projects vertically to the towing arms (114, 116) as an operating aid.

14. A tow train, consisting of a towing vehicle and at least one low-platform truck, which are connected to each other by the drawbar according to any one of claims 1 to 11.

## Revendications

1. Barre de timon pour un chariot à petite portée, notamment pour un transpalette à fourche manuel, avec
• une fourche de remorque (27), qui comporte deux bras de remorque (26) parallèles, dont chacun a des moyens (46, 48, 50) pour la connexion à un bras de charge (30) d'un chariot à petite portée sur son extrémité libre, et
• un adaptateur (18) pour la connexion de la barre de timon à un véhicule (10), l'adaptateur (18) étant relié à la fourche de remorque (27),
**caractérisée en ce que**
• chacun des deux bras de remorque parallèles comporte au moins une roulette (28), et
• les moyens (46, 48, 50) pour la connexion au bras de charge (30) comportent une languette en saillie (46) et une rainure (50) en travers à la direction longitudinale du bras de remorque, qui peut être engagée en prise arrière par une paroi sur le bout du bras de charge du chariot à petite portée.

2. Barre de timon selon la revendication 1, **caractérisée en ce que** l'adaptateur (18) est relié à la fourche de remorque (27) via un bras de timon (24).

3. Barre de timon selon l'une quelconque des revendications 1 à 2, **caractérisée en ce que** les moyens pour la connexion ont une butée (48) pour le bout du bras de charge du chariot à petite portée.

4. Barre de timon selon la revendication 2 ou 3, **caractérisée en ce que** le bras de timon est monté de manière pivotante autour d'un axe parallèle au sol, et en rotation autour d'un axe perpendiculaire au sol.

5. Barre de timon selon la revendication 4, **caractérisée en ce que** le bras de timon est soumis à une tension par ressort vers une position de pivotement.

6. Barre de timon selon l'une quelconque des revendications 1 à 5, **caractérisée en ce que** l'adaptateur a une tête d'articulation à travers laquelle la fourche de remorque est mobile dans chaque direction spatiale.

7. Barre de timon selon la revendication 6, **caractérisée en ce que** l'adaptateur a un axe parallèle au sol, autour duquel un bras de levier relié à la fourche de remorque peut être pivoté.

8. Barre de timon selon la revendication 7, **caractérisée en ce que** l'adaptateur comporte au moins une saillie et le bras de levier comporte au moins un évidement qui peut être mis en engagement avec l'au moins une saillie dans une position de repos pliée vers le haut de la fourche de remorque.

9. Barre de timon selon l'une quelconque des revendications 6 to 8, **caractérisée en ce que** sur son côté bas, l'adaptateur a une broche de raccordement qui est ronde en la section transversale.

10. Barre de timon selon l'une quelconque des revendications 1 à 9, **caractérisée en ce que** l'adaptateur a deux branches en forme de C qui tiennent un axe pour des roues du véhicule tractant.

11. Barre de timon selon l'une quelconque des revendications 1 à 10, **caractérisée en ce que** la hauteur du côté supérieur de chaque bras de remorque est plus petite qu'une hauteur prédéterminée, la hauteur prédéterminée correspondant au bord inférieur du bras de charge du chariot à petite portée dans son position levée.

12. Barre de timon selon l'une quelconque des revendications 1 à 3, **caractérisée en ce que** l'adaptateur (125) est raccordé à la fourche de remorque (112) de manière pivotante, et comporte une ouverture (126) pour la connexion à une broche de traction (128) sur son extrémité qui se projette à partir de la fourche de remorque (112).

13. Barre de timon selon la revendication 12, **caractérisée en ce que** la fourche de remorque (112) comporte un étrier (136), qui fait saillie verticalement aux bras de remorque (114, 116) comme une aide au maniement.

14. Train de chariot, consistant d'un véhicule trainant et au moins un chariot à petite portée, qui sont raccordés l'un à l'autre par la barre de timon selon l'une quelconque des revendications 1 à 11.
